# EUROPEAN PATENT APPLICATION

(11) **EP 2 819 072 A1**
(43) Date of publication of application: **31.12.2014**
(21) Application number: 13275266.8
(22) Date of filing: 29.10.2013
(51) Int. Cl.: G06Q 10/08, G06F 15/00, G06Q 30/02, H04L 29/06, G09F 3/20

(54) **SYSTEM FOR ELECTRONIC SHELF LABEL AND METHOD OF OPERATING SYSTEM FOR ELECTRONIC SHELF LABEL**

(30) Priority: 28.06.2013 KR 20130075952
(71) Applicant: Samsung Electro-Mechanics Co., Ltd., Gyeonggi-do (KR)
(72) Inventor: Woo, Seok Min, 443-743 Gyeonggi-do (KR); Byun, Gi Young, 443-743 Gyeonggi-do (KR); Kim, Hyun Hak, 443-743 Gyeonggi-do (KR); Woo, Sa Im, 443-743 Gyeonggi-do (KR)
(74) Representative: Powell, Timothy John

(57) **Abstract**

The present invention relates to a system for an ESL and a method of operating a system for an ESL, wherein an electronic tag includes a first communication unit for performing wireless communication by a first communication method; and a second communication unit for performing wireless communication by a second communication method having a higher transmission speed than the first communication method, and the server transmits an update data packet by determining one of the first communication method and the second communication method based on the capacity of the update data packet to be transmitted to the electronic tag or the type of contents defined by the update data packet. Thus, it is possible to efficiently transmit and receive large data while minimizing battery consumption.

## Description

### CROSS-REFERENCE TO RELATED APPLICATIONS

Claim and incorporate by reference domestic priority application and foreign priority application as follows:

### "CROSS REFERENCE TO RELATED APPLICATION

This application claims the benefit of Korean Patent Application Serial No. 10-2013-0075952, entitled filed June 28, 2013, which is hereby incorporated by reference in its entirety into this application."

### BACKGROUND OF THE INVENTION

### 1. Field of the Invention

The present invention relates to a system for an electronic shelf label and a method of operating a system for an electronic shelf label.

### 2. Description of the Related Art

Labels, which display product information and price, are used to display and sell a significant number of products in certain areas such as retail stores.

In general, price labels are attached near the corresponding products on display by directly writing product information necessary for sale, for example, price and discount information on paper by hand or printing the product information on paper according to the standardized format.

The conventional method as above seems to be simple and convenient and implemented at low cost, but the existing paper label application method has limitations in the areas, such as large retail stores, in which the standardized formats are used for tens of thousands of product items and product fluctuation occurs at any time.

That is, when the price fluctuation of some of the numerous product items occurs, it is needed to correct and change the labels in the location of the corresponding products displayed in the retail stores after picking out the corresponding labels and manually writing or printing the product information such as the changed prices.

Therefore, whenever the price information of the products is changed, the time and workforce for the correction and change are needed and the need for improvement of this is on the rise due to the properties of the large retail stores.

That is, there is a need to develop a means for changing product information rapidly, accurately, and simply at minimum costs.

In recent times, in order to satisfy the needs of the market, there are attempts to replace the existing paper label with an electronic tag using an electronic device, and related technologies are disclosed in many documents such as Patent Document 1 and Patent Document 2.

According to the language/cultural differences of organizations and countries in which the related technologies have been developed, various terms such as an electronic shelf label (ESL), an electronic price label (EPL), and an electronic information label (EIL) are used, but there is not much difference in the purpose and use thereof.

Hereinafter, in the present invention, it will be referred to as "electronic tag" in Korean and "ESL" in English.

Meanwhile, the electronic tags developed in the early days mainly use a so-called segment method (or passive method) that displays numbers or letters, special symbols, etc. by turning on or off predetermined segments on a panel on which a plurality of segments are disposed.

In recent times, with the development of the related technologies such as display panels and communication technologies, the electronic tags, which can output various images on a screen as well as display standardized letters, have been developed and put to practical use.

In the past segment type electronic tag, data for displaying numbers, letters, etc. could be implemented in a relatively small capacity, but in order to display images etc. on the electronic tag, it is needed to transceive and process very large data compared to the segment type.

Further, since the large retail stores are also on an increasing trend, it cannot but take a considerable time to transmit large data to all of the many electronic tags.

### [Related Art Document]

### [Patent Document]

Patent Document 1: U.S. Patent No. 2010-0205000
Patent Document 2: U.S. Patent No. 2010-0106588

### SUMMARY OF THE INVENTION

The present invention has been invented in order to overcome the above-described problems and it is, therefore, an object of the present invention to provide a system for an electronic shelf label (ESL) that can transmit and receive data including the contents to be displayed on an electronic tag by selectively utilizing a high-speed communication method and a low-speed communication method.

Further, it is another object of the present invention to provide a method of operating a system for an ESL that can transmit and receive data including the contents to be displayed on an electronic tag by selectively utilizing a high-speed communication method and a low-speed communication method.

In accordance with one aspect of the present invention to achieve the object, there is provided a system for an ESL including a server, a gateway, and an electronic tag, wherein the electronic tag includes a first communication unit for performing wireless communication by a first communication method; and a second communication unit for performing wireless communication by a second communication method having a higher transmission speed than the first communication method, and the server transmits an update data packet by determining one of the first communication method and the second communication method based on the capacity of the update data packet to be transmitted to the electronic tag or the type of contents defined by the update data packet.

At this time, the server may include an update data packet generation means for generating the update data packet; and a comparison means for determining the first communication method as the communication method when the capacity of the generated update data packet is less than a predetermined reference value and determining the second communication method as the communication method when the capacity of the generated update data packet is greater than the predetermined reference value.

Further, the first communication method may be a wireless communication method selected from Zigbee, infrared, and low-frequency RF methods, and the second communication method may be a wireless communication method selected from Wi-Fi and Bluetooth methods.

Further, the server may further include an IP address management means for generating an IP address to be assigned to the electronic tag when the comparison means determines the second communication method as the communication method.

Further, the IP address management means may recover the IP address assigned to the electronic tag after the transmission of the update data packet to the electronic tag is completed through the second communication method.

Meanwhile, the first communication method may be a wireless communication method selected from Zigbee, infrared, and low-frequency RF methods, the second communication method may be a wireless communication method selected from Wi-Fi and Bluetooth methods, and the server may include an update data packet generation means for generating the update data packet; a comparison means for determining the second communication method as the communication method only when the type of the contents defined by the generated update data packet is an image; and an IP address management means for generating an IP address to be assigned to the electronic tag when the comparison means determines the second communication method as the communication method.

In accordance with another aspect of the present invention to achieve the object, there is provided a system for an ESL including a server, a gateway, and an electronic tag, wherein the electronic tag includes a first communication unit for performing wireless communication by a first communication method that is a wireless communication method selected from Zigbee, infrared, and low-frequency RF methods; and a second communication unit for performing wireless communication by a second communication method that is a wireless communication method selected from Wi-Fi and Bluetooth methods, and the server transmits data by determining one of the first communication method and the second communication method.

At this time, the server may include an update data packet generation means for generating an update data packet; a comparison means for determining the first communication method as the communication method when the capacity of the generated update data packet is less than a predetermined reference value and determining the second communication method as the communication method when the capacity of the generated update data packet is greater than the predetermined reference value; and an IP address management means for generating an IP address to be assigned to the electronic tag when the comparison means determines the second communication method as the communication method.

Further, the IP address management means may recover the IP address assigned to the electronic tag after the transmission of the update data packet to the electronic tag is completed through the second communication method.

Meanwhile, the server may include an update data packet generation means for generating an update data packet; a comparison means for determining the second communication method as the communication method only when the type of contents defined by the generated update data packet is an image; and an IP address management means for generating an IP address to be assigned to the electronic tag when the comparison means determines the second communication method as the communication method.

In accordance with another aspect of the present invention to achieve the object, there is provided a method of operating a system for an ESL, including: transmitting an update request signal from an electronic tag to a server; generating an update data packet by the server; determining one of a first communication method and a second communication method by the server; activating a second communication unit by transmitting a second command signal by the server and receiving the second command signal by the electronic tag when the second communication method is determined; and transmitting the update request signal by the electronic tag after activating the second communication unit and transmitting the update data packet by the server after receiving the update request signal, wherein the electronic tag receives the update data packet through the second communication method.

At this time, the first communication method may be a wireless communication method selected from Zigbee, infrared, and low-frequency RF methods, and the second communication method may be a wireless communication method selected from Wi-Fi and Bluetooth methods.

Further, the second command signal may include a command to use the second communication method and an IP address to be used by the electronic tag.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIG. 1 is a view schematically showing a system for an ESL in accordance with an embodiment of the present invention;

FIG. 2 is a view schematically showing a screen on which information is displayed in an electronic tag of the system for an ESL in accordance with an embodiment of the present invention;

FIG. 3 is a block diagram schematically showing the electronic tag of the system for an ESL in accordance with an embodiment of the present invention;

FIG. 4 is a block diagram schematically showing a server of the system for an ESL in accordance with an embodiment of the present invention;

FIG. 5 is a view schematically showing a method of operating a system for an ESL in accordance with an embodiment of the present invention; and

FIG. 6 is a view schematically showing the method of operating a system for an ESL in accordance with an embodiment of the present invention.

### DETAILED DESCRIPTION OF THE PREFERABLE EMBODIMENTS

Advantages and features of the present invention and methods of accomplishing the same will be apparent by referring to embodiments described below in detail in connection with the accompanying drawings. However, the present invention is not limited to the embodiments disclosed below and may be implemented in various different forms. The embodiments are provided only for completing the disclosure of the present invention and for fully representing the scope of the present invention to those skilled in the art. Like reference numerals refer to like elements throughout the specification.

Terms used herein are provided to explain embodiments, not limiting the present invention. Throughout this specification, the singular form includes the plural form unless the context clearly indicates otherwise. When terms "comprises" and/or "comprising" used herein do not preclude existence and addition of another component, step, operation and/or device, in addition to the above-mentioned component, step, operation and/or device.

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "coupled," as used herein, is defined as directly or indirectly connected in an electrical or non-electrical manner. Objects described herein as being "adjacent to" each other may be in physical contact with each other, in close proximity to each other, or in the same general region or area as each other, as appropriate for the context in which the phrase is used. Occurrences of the phrase "in one embodiment" herein do not necessarily all refer to the same embodiment.

Hereinafter, configurations and operational effects of the present invention will be described in detail with reference to the accompanying drawings.

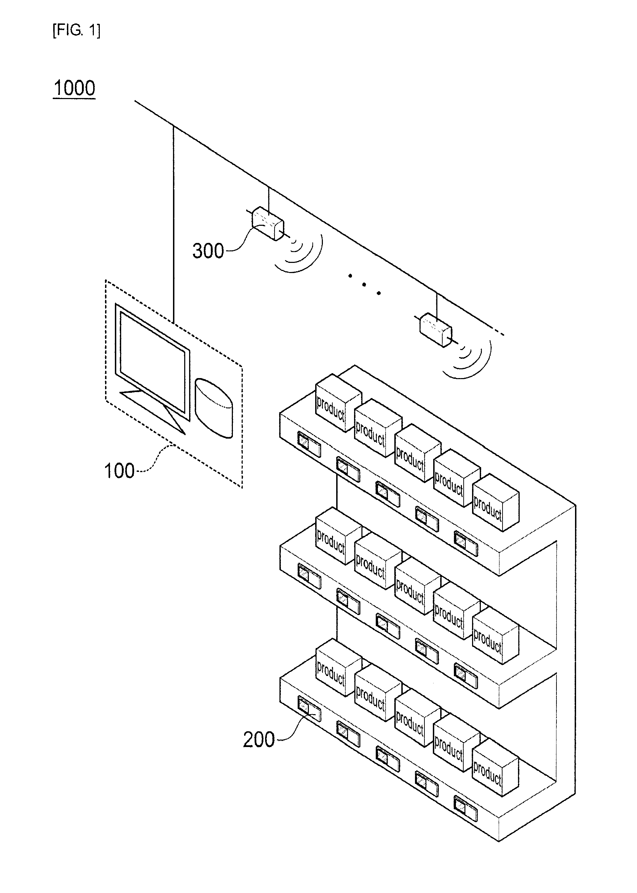

FIG. 1 is a view schematically showing a system for an electronic shelf label (ESL) in accordance with an embodiment of the present invention.

Referring to FIG. 1, a system 1000 for an ESL may include a server 100 and an electronic tag 200. At this time, a repeater 300 such as a typical gateway may be provided so that the electronic tag 200 installed away from the server 100 can smoothly perform transmission and reception of data.

Generally, while the server 100 is constructed based on a wired communication network such as a TCP/IP network, the electronic tag 200 is connected to a communication network mainly in a wireless manner.

Therefore, a means of relaying a wired communication network and a wireless communication network and converting data is needed, and the gateway 300 can play a role of the above means.

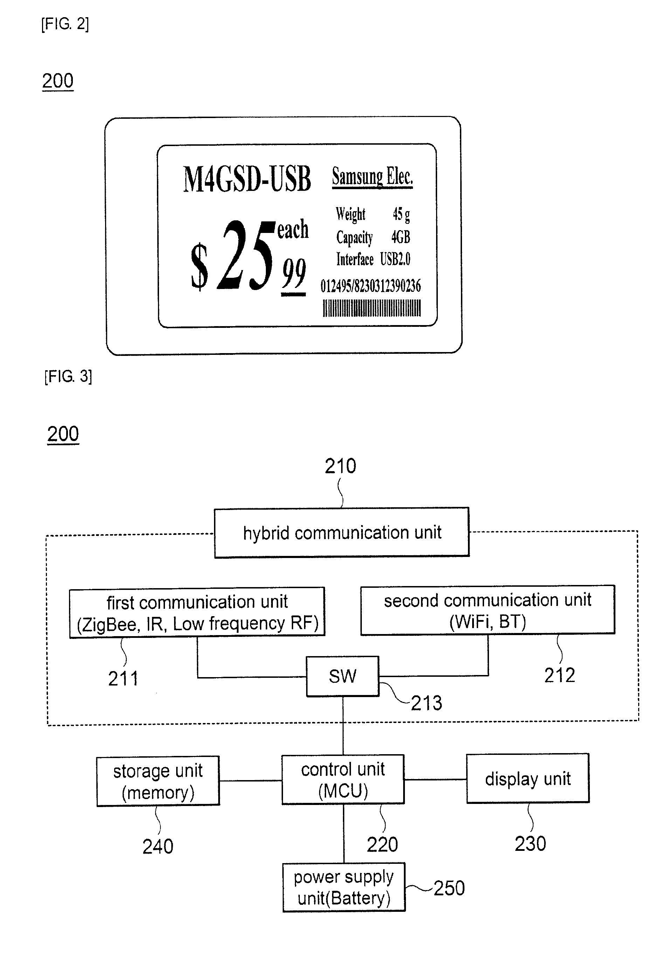

FIG. 2 is a view schematically showing a screen on which information is displayed in the electronic tag 200 of the system 1000 for an ESL in accordance with an embodiment of the present invention, and FIG. 3 is a block diagram schematically showing the electronic tag 200 of the system 1000 for an ESL in accordance with an embodiment of the present invention.

Referring to FIGS. 2 and 3, the electronic tag 200 is a device that displays product information acquired using a communication means. At this time, the communication means are a wired communication means and a wireless communication means, but in the present invention, the latter is a basic means of communication. Therefore, the electronic tag 200 provided in the system 1000 for an ESL in accordance with an embodiment of the present invention may include a hybrid communication unit 210 that enables wireless transmission and reception, a control unit 220 that analyzes and processes the signal transmitted through the hybrid communication unit 210, a storage unit 240 required for processing, a display unit 230 that displays information to users according to the signal processed by the control unit 220, and a power supply unit 250 that provides power to perform the above operations.

Here, FIG. 3 focuses on the role of the major components that implement the electronic tag 200, and it is not needed to separate the actual hardware components. That is, due to the development of electronic circuit technologies and semiconductor technologies, some of these blocks can be configured into one IC. As an example, the hybrid communication unit 210, the control unit 220, and the storage unit 240 may be integrally implemented in one IC.

Meanwhile, the communication unit of the electronic tag 200 may be implemented as the hybrid communication unit 210 including a first communication unit 211 and a second communication unit 212. The first communication unit 211 may perform wireless communication by a first communication method, and the second communication unit 212 may perform wireless communication by a second communication method. At this time, the second communication method may be a communication method that has a higher transmission speed than the first communication method.

For example, the first communication method may be a wireless communication method that is selected from Zigbee, infrared and low-frequency RF methods.

In the existing segment type or text-based electronic tag 200, the amount of information transceived between the server 100 and the electronic tag 200 is limited. Accordingly, since the information displayed by the electronic tag 200 can be implemented only by data including a payload of 100 bytes, it is possible to exchange the sufficient information through the Zigbee, infrared, and low-frequency RF methods.

Since the first communication method has a low transmission speed and output power thereof is not high, it can be operated without changing a battery for a long time even though the battery is used as the power supply unit 250.

Typically, the Zigbee communication method complies with 2.4 GHz IEEE 802.15.4-based communication protocol. In the 2.4 GHz ISM IEEE 802.15.4 protocol, the transmission speed is fixed to 250 kbps, and the packet capacity, which can be transmitted at a time, is defined as up to 128 bytes or less.

On the other hand, the second communication method may be a wireless communication method that is selected from Wi-Fi and Bluetooth methods.

The Wi-Fi or Bluetooth method has a remarkably higher transmission speed than the above-described Zigbee, infrared, and low-frequency RF methods. Therefore, when using the second communication method, it is possible to transceive various large information, such as logo images of products or manufacturers, promotion images, barcodes, product images, and origin images, between the server 100 and the electronic tag 200.

However, since the Wi-Fi or Bluetooth method has high power consumption due to relatively high output power, when the electronic tag 200, which receives power by the battery, transmit and receive all data using only the Wi-Fi or Bluetooth method, the life of the battery of the electronic tag 200 may be rapidly reduced.

Furthermore, in case of the Wi-Fi method, an IP address is needed to perform wireless communication between two objects, and since there is a limit of the quantity of the IP addresses which can be possessed and allocated to the electronic tag 200 by the gateway 300 or an access point that performs Wi-Fi communication, it is difficult to transceive data with all the electronic tags 200 by applying only the Wi-Fi method to the system 1000 for an ESL including thousands or tens of thousands of the electronic tags 200.

Considering these points, the electronic tag 200 of the system 1000 for an ESL in accordance with an embodiment of the present invention includes the hybrid communication unit 210 of which the first communication unit 211 and the second communication unit 212 can selectively perform communication.

That is, when the electronic tag 200 can use both of a segment display method and a dot-matrix display method, if there are update items only in the area displayed by the segment display method, the capacity of data for updating the corresponding part may be relatively low.

Further, even when the update items for the display unit 230 of the electronic tag 200 are only text-based information, the capacity of data may be relatively low. When transmitting and receiving the low capacity data like this, only the first communication unit 211 may be activated to perform communication.

On the contrary, when the update items for the display unit 230 of the electronic tag 200 includes image change or relatively higher capacity information than the text-based information, the second communication unit 212 may be activated to perform communication.

Further, a switch unit 213 may be provided in the hybrid communication unit 210 to selectively activate the first communication unit 211 and the second communication unit 212 and perform wireless communication through the activated communication unit.

Accordingly, it is possible to implement the system 1000 for an ESL that can transmit and receive large files at high speed while preventing a great reduction in the life of the battery.

Further, it is possible to avoid difficulty due to the limited quantity of the IP addresses by assigning the IP address only to the electronic tag 200 that requires wireless communication using the second communication method and recovering the IP address.

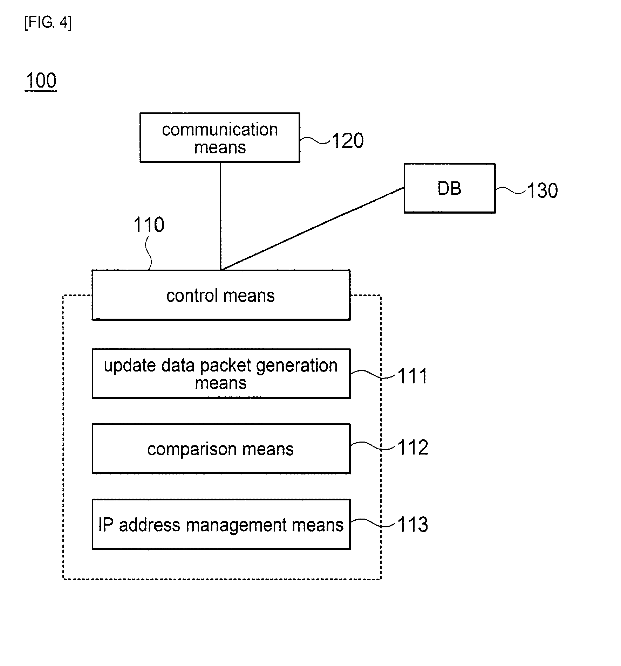

FIG. 4 is a block diagram schematically showing the server 100 of the system 1000 for an ESL in accordance with an embodiment of the present invention.

The server 100 of the system 1000 for an ESL in accordance with an embodiment of the present invention may perform a function of transmitting an update data packet by determining one of the first communication method and the second communication method based on the capacity of the update data packet to be transmitted to the electronic tag 200 or the type of contents defined by the update data packet.

Referring to FIG. 4, the server 100 may include a control means 110, a communication means 120, and a database 130.

At this time, the communication means 120 may perform a function of transmitting and receiving data by being connected to the gateway 300 or the access point in a wired or wireless manner.

Further, the database 130 may store the information to be displayed on the electronic tag 200 such as information on the gateway 300 or the access point and the electronic tag 200, product information such as product name or price, and various events such as temporary discounts. This information may be stored in the database 130 through the control means 110 by being transmitted to the server 100 from a separate legacy system (not shown) such as a POS system or directly input to the server 100 through a separate input device.

Meanwhile, the control means 110 may include an update data packet generation means 111, a comparison means 112, and an IP address management means 113.

First, the update data packet generation unit 111 may perform a function of generating the update data packet to be transmitted to the electronic tag 200.

That is, when the server 100 receives an update request signal from the electronic tag 200, the update data packet generation unit 111 may generate the update data packet by extracting the contents to be displayed on the corresponding electronic tag 200 from the database 130.

At this time, the update request signal received from the electronic tag 200 may include state information of the electronic tag 200. The update data packet generation means 111 may generate the update data packet by comparing the information currently displayed on the corresponding electronic tag 200 and the contents to be displayed and extracting only the different part.

Next, the comparison means 112 may perform a function of determining the communication method of the electronic tag 200 by comparing the update data packet with a predetermined reference.

That is, when the capacity of the update data packet is less than a predetermined reference value, the comparison means 112 may determine the first communication method as the communication method of the electronic tag 200. On the contrary, when the capacity of the update data packet is greater than the predetermined reference value, the comparison means 112 may determine the second communication method as the communication method of the electronic tag 200.

Here, the predetermined reference value may be an optimum data packet capacity that can be processed by the first communication unit 211 of the electronic tag 200. For example, when the first communication unit 211 is implemented with a Zigbee communication module, since the maximum capacity of each packet is defined as 128 bytes, the predetermined reference value may be set to 129 bytes or a multiple of 129 bytes. At this time, the case in which the predetermined reference value is set to a multiple of 120 bytes may correspond to the case in which two or more packets are continuously transmitted. When the number of the packets increases, since it takes a long time to transceive data with one electronic tag 200, it is preferred that the number of the packets is limited to less than the appropriate number.

On the other hand, the communication method may be determined according to the type of the contents defined by the update data packet.

That is, when the update data packet defines the text-based contents, the first communication method may be selected, and when the update data packet defines the image-based contents, the second communication method may be selected.

The type of the contents may be previously included in the data regarding the corresponding display contents in the form of a flag or tag in the step of being stored in the database 130 of the server 100. That is, in the step of providing the display content data to the server 100 from a legacy system etc. connected to the server 100, a separate flag or tag may be displayed according to whether the data is text-based information or image-based information.

Next, the IP address management means 113 may perform a function of assigning the IP address to the corresponding electronic tag 200 when it is determined that the electronic tag 200 transmits and receives information by the second communication method, particularly by the Wi-Fi method.

Further, the IP address management means 113 may perform a function of recovering the previously assigned IP address after the data communication with the electronic tag 200 is completed and assigning the corresponding IP address when another electronic tag 200 wants to perform communication by the Wi-Fi method.

It is possible to transmit and receive data by the Wi-Fi method in the system 1000 for an ESL including thousands or tens of thousands of the electronic tags 200 only by the limited IP addresses by repeating the process of assigning the IP address only to the electronic tag 200 that requires communication by the Wi-Fi method and recovering the IP address.

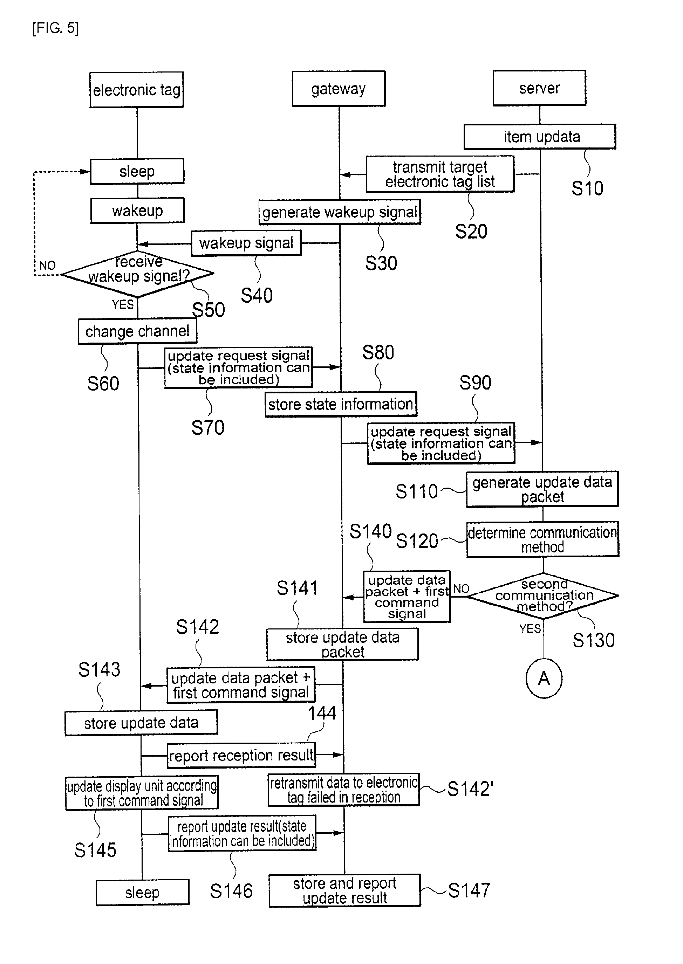

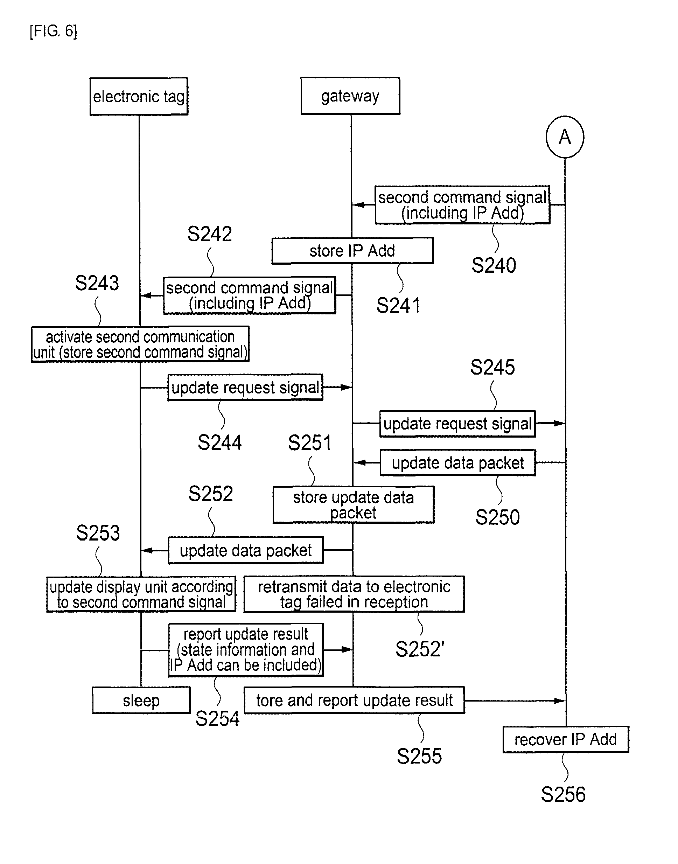

FIGS. 5 and 6 are views schematically showing a method of operating a system 1000 for an ESL in accordance with an embodiment of the present invention.

The method of operating a system 1000 for an ESL in accordance with an embodiment of the present invention may include the steps of transmitting an update request signal from an electronic tag 200 to a server 100; generating an update data packet by the server 100; determining one of a first communication method and a second communication method by the server 100; transmitting a second command signal by the server 100 and receiving the second command signal by the electronic tag 200 to activate a second communication unit 212 when the second communication method is determined; and transmitting the update request signal by the electronic tag 200 after activating the second communication unit 212 and transmitting the update data packet by the server 100 after receiving the update request signal, wherein the electronic tag 200 receives the update data packet through the second communication method.

At this time, the second command signal may include a command to use the second communication method and an IP address to be used by the electronic tag 200.

Referring to FIGS. 5 and 6, when the items to be updated are generated in the server 100 (S10), the server 100 transmits a list of the electronic tags 200, which should perform the corresponding update, to a gateway 300 (S20).

Next, the gateway 300 generates a wake-up signal for waking up the electronic tags which should perform the update (S30) and transmits the wake-up signal to the corresponding electronic tag 200 (S40).

Generally, the electronic tag 200 repeats wake-up and sleep states to reduce power consumption, and it is determined whether the electronic tag 200 in the sleep state wakes up according to a predetermined cycle to receive the wake-up signal (S50).

The electronic tag 200, which didn't receive the wake-up signal, is converted to the sleep state again and repeats the wake-up and sleep states later according to the predetermined cycle.

At this time, the electronic tag 200, which performs wireless communication by the Zigbee method, may separately operate a frequency channel for transmission and reception of a wake-up signal and a frequency channel for transmission and reception of general data. When the channel for transmission and reception of a wake-up signal and the frequency channel for transmission and reception of data are operated separately, the electronic tag 200, which received the wake-up signal, changes the frequency channel from the wake-up channel into the frequency channel for transmission and reception of additional data (S60).

Next, the electronic tag 200 transmits the update request signal to the gateway 300. At this time, the update request signal may include state information representing the state of the electronic tag 200 (S70). Here, the state information may be information that defines the temperature of the electronic tag 200, the remaining amount of a battery, whether the components of the electronic tag 200 are operated normally, and when the currently displayed information is updated.

Next, the gateway 300 stores the state information (S80) and transmits the update request signal of the corresponding electronic tag 200 to the server (S90). Even in this case, the state information of the electronic tag 200 may be included in the update request signal and transmitted to the server 100.

Next, the server 100 generates the update data packet (S110). At this time, as described above, an update data packet generation unit 111 of the server 100 may generate the update data packet by comparing the contents currently displayed by the corresponding electronic tag 200 with the contents to be updated.

Next, it is determined which communication method is used to transmit and receive data by the electronic tag (S120). At this time, as described above, the communication method may be determined based on the capacity of the update data packet or the type of the contents.

Next, when it is determined as the first communication method, the update data packet and a first command signal are transmitted (S140), and the gateway 300 receives the update data packet and the first command signal to transmit them to the electronic tag 200. At this time, the gateway 300 may store the update data packet by including a separate storage means (S141).

Next, the electronic tag 200 stores the received update data and updates the contents output to a display unit 230 of the electronic tag 200 according to the first command signal (S145). At this time, the electronic tag 200 may report the result of the data reception to the gateway 300 (S144), and the data may be retransmitted to the electronic tag 200 which didn't smoothly receive the update data (S142').

Further, the electronic tag 200 may report the result of the update to the gateway 300. At this time, the state information of the electronic tag 200 also may be included (S146).

When the update is completed like this, the electronic tag 200 may be converted to the sleep state again to minimize battery consumption.

The processes described above, that is, the transmission and reception of the wake-up signal, the transmission and reception of the update request signal, and the transmission and reception of the update data packet may be performed by a first communication unit 211.

Continuously, referring to FIG. 6, when the second communication method is determined in the above step S130, the server 100 may transmit a second command signal (S240). At this time, the second command signal may include an IP address to be used by the electronic tag 200.

Next, the gateway 300 receives the second command signal to transmit the second command signal to the electronic tag 200. The IP address may be stored in the storage means provided in the gateway 300 (S241).

Next, the electronic tag 200, which received the second command signal, activates the second communication unit 212 (S243) and transmits the update request signal through the second communication unit 212 (S244).

The update request signal is transmitted to the server 100 through the gateway 300 (S245), and the server 100 transmits the previously generated update data packet according to the update request signal (S250). At this time, the update data packet may have a relatively large capacity or define image contents.

Next, the gateway 300 transmits the update data packet to the electronic tag 200 (S252). At this time, the gateway 300 may store the update data packet (S251). Accordingly, the data may be retransmitted to the electronic tag 200 which failed to receive the update data packet (S252').

Next, the electronic tag 200 updates the display unit 230 by the contents included in the update data packet according to the previously received second command signal (S253) and is converted to the sleep state after reporting the result of the update (S254).

At this time, the second communication 212 may be inactivated, and the IP address used by the electronic tag 200 may be recovered by the server 100 (S256) to be used again when performing communication with another electronic tag 200 by the second communication method.

The system for an ESL in accordance with an embodiment of the present invention, which is configured as above, can efficiently transmit and receive large data while minimizing battery consumption.

Further, it is possible to efficiently transmit and receive data in the system for an ESL including thousands or tens of thousands of electronic tags in spite of limited IP addresses.

## Claims

1. A system for an ESL comprising a server, a gateway, and an electronic tag, wherein the electronic tag comprises:
a first communication unit for performing wireless communication by a first communication method; and
a second communication unit for performing wireless communication by a second communication method having a higher transmission speed than the first communication method, and
the server transmits an update data packet by determining one of the first communication method and the second communication method based on the capacity of the update data packet to be transmitted to the electronic tag or the type of contents defined by the update data packet.

2. The system for an ESL according to claim 1, wherein the server comprises:
an update data packet generation means for generating the update data packet; and
a comparison means for determining the first communication method as the communication method when the capacity of the generated update data packet is less than a predetermined reference value and determining the second communication method as the communication method when the capacity of the generated update data packet is greater than the predetermined reference value.

3. The system for an ESL according to claim 2, wherein the first communication method is a wireless communication method selected from Zigbee, infrared, and low-frequency RF methods, and the second communication method is a wireless communication method selected from Wi-Fi and Bluetooth methods.

4. The system for an ESL according to claim 3, wherein the server further comprises:
an IP address management means for generating an IP address to be assigned to the electronic tag when the comparison means determines the second communication method as the communication method.

5. The system for an ESL according to claim 4, wherein the IP address management means recovers the IP address assigned to the electronic tag after the transmission of the update data packet to the electronic tag is completed through the second communication method.

6. The system for an ESL according to claim 1, wherein the first communication method is a wireless communication method selected from Zigbee, infrared, and low-frequency RF methods,
the second communication method is a wireless communication method selected from Wi-Fi and Bluetooth methods, and
the server comprises:
an update data packet generation means for generating the update data packet;
a comparison means for determining the second communication method as the communication method only when the type of the contents defined by the generated update data packet is an image; and
an IP address management means for generating an IP address to be assigned to the electronic tag when the comparison means determines the second communication method as the communication method.

7. A system for an ESL comprising a server, a gateway, and an electronic tag, wherein the electronic tag comprises:
a first communication unit for performing wireless communication by a first communication method that is a wireless communication method selected from Zigbee, infrared, and low-frequency RF methods; and
a second communication unit for performing wireless communication by a second communication method that is a wireless communication method selected from Wi-Fi and Bluetooth methods, and
the server transmits data by determining one of the first communication method and the second communication method.

8. The system for an ESL according to claim 7, wherein the server comprises:
an update data packet generation means for generating an update data packet;
a comparison means for determining the first communication method as the communication method when the capacity of the generated update data packet is less than a predetermined reference value and determining the second communication method as the communication method when the capacity of the generated update data packet is greater than the predetermined reference value; and
an IP address management means for generating an IP address to be assigned to the electronic tag when the comparison means determines the second communication method as the communication method.

9. The system for an ESL according to claim 8, wherein the IP address management means recovers the IP address assigned to the electronic tag after the transmission of the update data packet to the electronic tag is completed through the second communication method.

10. The system for an ESL according to claim 7, wherein the server comprises:
an update data packet generation means for generating an update data packet;
a comparison means for determining the second communication method as the communication method only when the type of contents defined by the generated update data packet is an image; and
an IP address management means for generating an IP address to be assigned to the electronic tag when the comparison means determines the second communication method as the communication method.

11. A method of operating a system for an ESL according to one of claims 1 to 10, comprising:
transmitting an update request signal from an electronic tag to a server;
generating an update data packet by the server;
determining one of a first communication method and a second communication method by the server;
activating a second communication unit by transmitting a second command signal by the server and receiving the second command signal by the electronic tag when the second communication method is determined; and
transmitting the update request signal by the electronic tag after activating the second communication unit and transmitting the update data packet by the server after receiving the update request signal, wherein the electronic tag receives the update data packet through the second communication method.

12. The method of operating a system for an ESL according to claim 11, wherein the first communication method is a wireless communication method selected from Zigbee, infrared, and low-frequency RF methods, and the second communication method is a wireless communication method selected from Wi-Fi and Bluetooth methods.

13. The method of operating a system for an ESL according to claim 12, wherein the second command signal comprises a command to use the second communication method and an IP address to be used by the electronic tag.
